# EUROPEAN PATENT APPLICATION

(11) **EP 2 258 751 A1**
(43) Date of publication of application: **08.12.2010**
(21) Application number: 09161770.4
(22) Date of filing: 03.06.2009
(51) Int. Cl.: C08J 5/04

(54) **Indoor furniture component, its composition, production, use**

(71) Applicant: Swedwood International AB, 262 71 Ängelholm (SE)
(72) Inventor: Szoke, Lajos, 9422, Harka (HU); Polz, Balazs, 9408, Sopron-Gorbehalom (HU)
(74) Representative: Platt, Timothy Nathaniel

(57) **Abstract**

The present invention regards an extruded indoor furniture component, the ingredients of which being comprised of cellulosic fibres (CF) having an average diameter of 150-700 µm The extruded indoor furniture component (1) being comprised of a polymer (IGP) of an amount of about 20-28 wt.%; a coupling agent (CA) of an amount of about 1-3 wt.% disclosing polar characteristic for coupling to said cellulosic fibres (CF) and apolar characteristic for coupling to the polymer (IGP); and the cellulosic fibres (CF) is of an amount of about 70% wt.%.

The present invention also regards a method of producing such an extruded indoor furniture component (1) and the use of it.

## Description

### TECHNICAL FIELD

The present invention relates to an indoor furniture component according to the preamble of claim 1. It also relates to a method defined in claim 11 and to a use according to claim 17. The invention relates especially to the indoor furniture industry and indoor furniture market.

### BACKGROUND ART

Modern plywood, as an alternative to natural wood, was invented in the 19th century. Particle board (or chipboard) was intended to be a replacement. It used waste material such as planer shavings, off cuts or sawdust, hammer-milled into chips, and bound together with a phenolic resin. Most other early particleboard manufacturers used similar processes, though often with slightly different resins. It was found that better strength, appearance and resin economy could be achieved by using more uniform, manufactured chips. Manufacturers began processing solid birch, beech, alder, pine and spruce into consistent chips and flakes. These finer layers were then placed on the outsides of the board, with the central section composed of coarser, cheaper chips. This type of board is known as three-layer particleboard.

More recently, graded density particleboard has also evolved. It contains particles that gradually become smaller as they get closer to the surface Particleboard is manufactured by mixing wood particles or flakes together with a resin and forming the mix into a sheet. Resin, in liquid form, is then sprayed through nozzles onto the particles.

There are several types of resins that are commonly used. Urea formaldehyde resin is the cheapest and easiest to use. It is used for most non-water resistant boards. Phenol formaldehyde is also fairly expensive. It is dark colored and highly durable. These resins are sometimes mixed with other additives before being applied to the particles, in order to make the final product waterproof, fireproof, insect proof, or to give it some other quality.

Particleboard is cheaper, denser and more uniform than conventional wood and plywood and is substituted for them when appearance and strength are less important than cost. However, particleboard can be made more attractive by painting or the use of wood veneers that are glued onto surfaces that will be visible. Though it is denser than conventional wood, it is the lightest and weakest type of fiberboard, except for insulation board. Medium-density fiber board (MDF) and hardboard, also called high-density fiberboard, are stronger and denser than particleboard.

A major disadvantage of particleboard is that it is very prone to expansion and discoloration due to moisture, particularly when it is not covered with paint or another sealer. Therefore, it is rarely used outdoors or places that have high levels of moisture, with the exception of some bathrooms, kitchens and laundries, where it is commonly used as an underlayment beneath a continuous sheet of vinyl floor covering. In such an installation the edges must be properly covered upward against the wall and joints and non-covered edges must be properly sealed against moisture penetration. A higher quality material not subject to expansion is underlayment-grade plywood, which is constructed without interior voids in its layers to better resist the high local pressure from objects such as stiletto heels.

Furniture industry has also tried to reach the market targeting extruded furniture components. However, these extruded chipboard indoor furniture components have been difficult to produce cost-effective due to the strength problem. The furniture industry has tried to solve this problem by trying to strengthening the component by means of various strengthening elements. The strengthening elements can be placed either in the transport packing per se supporting the component, or within the component serving as a reinforcement bar. A common furniture installer not skilled in the art may easily breach the extruded chipboard furniture component. A breach of the extruded chipboard furniture component may accidentally occur when he or she is going to mount the extruded chipboard furniture component in e.g. a kitchen. Said furniture industry has also in the meantime tried to reach the market targeting extruded indoor furniture components being easily mountable in temporarily humid indoor environments, such as in kitchen. The traditional chipboard indoor furniture components have a drawback to swell up when being exposed to humidity. This has been solved by various complementary method steps, which have to be performed by said common furniture installer, for example, he or she must glue a water proof strip onto a cut edge of the traditional extruded chipboard indoor furniture component for preventing the same to swell up.

The other concern is with the release of formaldehyde. Formaldehyde is classified by the WHO as a human carcinogen. 98-99% of this chemical is contained within the board by the curing process. However a small amount of emission occurs due to decomposition of the resin. Normally this is at very low levels, but concentrations may build up where large quantities of particleboard are present in a poorly ventilated area.

Particleboard's selling points compared to solid timber are its price, its availability in large flat sheets and its ability to be decorated with melamine based overlays. However, it has several other advantages, one of which is its stability. Solid wood is prone to warping and splitting with changes in humidity, whereas particleboard is not. This stability enables new design possibilities, without having to take into account seasonal variations. Untreated particleboard will disintegrate, however, when exposed to high levels of moisture. This problem is somewhat mitigated by laminating the particle board on both sides with melamine resin to reduce moisture ingress. Solid wood has structural advantages over particleboard. It is stronger, particularly in extension. Fasteners should be designed specially for particleboard; ordinary screws and nails will not provide the correct holding power over time. Threads may strip, portions of the particleboard may "blow out" when subjected to extension stress. In part this arises from the lack of elasticity in particleboard resins as compared to the long strands and compressible voids contained in solid wood, a feature that while preserved in the manufacture of plywood is compromised in particleboard. The strength of particleboard, in the context of the application and cost, can offer advantages over solid wood. Particularly in the sidewalls of cabinets, where stress owing to support of loaded shelves or appliances is compressive, particleboard can be an excellent choice in dry environments with no or minimum humidity.

Solid wood is more durable than particleboard. Damage to solid wood can be repaired by removing and replacing damaged material then refinishing using known wood treatments that can be matched. Since particleboard is typically faced with by a non-wood veneer, it may be impossible to match the original finish. In addition, damage to particleboard is typified by structural failure and exposure of sizable jagged faults. In short, damage to particleboard is normally very difficult to repair, usually requiring replacement of the damaged particleboard elements.

Most people consider solid wood furniture to be more attractive than particleboard. Recognizing this, furniture makers often cover particle board with real or imitation veneers, in an effort to simulate the look of solid wood.

Today is used wood-plastic composite WPC-lumber in outdoor environment.

Among the advantages of WPC being recognized by consumers for the last decade are lower (compared with wood) maintenance requirements, including no need for staining, sealing and painting, higher resistance to termites and wood-destroying microbes, the absence of knots and splinters, and environmentally friendly characteristics compared to preservative-treated lumber.

The WPC lumber is composed of wood from recovered saw dust (and other cellulose-based fiber fillers such as pulp fibers, peanut hulls, bamboo, straw, digestate, etc.) and virgin or waste plastics including high-density polyethylene, PVC, PP, ABS, PS and PLA. The powder or fibers are mixed to a dough-like consistency and then extruded or moulded to the desired shape. Additives such as colorants, coupling agents, stabilizers, blowing agents, reinforcing agents, foaming agents, lubricants help tailor the end product to the target area of application. The material is formed into both solid and hollow profiles or into injection moulded parts and products. With the diversity of organic components used in wood/plastic composite processing, there is no single answer to reliably handling these potentially difficult materials. In some applications standard thermoplastic injection moulding machines and tools can be utilized.

The WPC is used in outdoor deck floors, railings, fences, landscaping timbers, cladding and siding, window and door frames etc. Manufacturers claim that wood-plastic composite is more environmentally friendly and requires less maintenance than the alternatives of solid wood treated with preservatives or solid wood of rot-resistant species. Resistant to cracking and splitting, these materials can be moulded with or without simulated wood grain details. Even with the wood grain design these materials are still visually easy to distinguish from natural timber as the grains are the same uniform color as the rest of the material.

The wood fibres can be produced to a relatively low cost compared with the production of carbon fibres etc., which otherwise are used as reinforcement elements in the plastic. A WPC-extrusion method is disclosed in WO 03008494 A1 wherein a mixture of wood fibres and plastic is extruded into a hollow profile being used for indoor construction building elements in the form of panel-works, wainscots, base-boards and other decorative, profiled elements around windows, etc.

EP 0 648 801 A1 describes a process for the bonding a polyvinyl chloride film to a fibre board panel by means of a thermoplastic polymer grafted with an ethylenically unsatured carboxylic acid or anhydride. Examples of the acids and anhydrides are acrylic acid, methacrylic acid, maleic acid, fumaric acid, etc.

EP 0 747 419 A2 describes a composite capable of formation into pellets comprising a cylindrical extrudate, the major proportion of which comprises a polymer and about 10-45 wt.% of chemical modified cellulosic fibres having a minimum thickness of 0,3 mm and a minimum length of 1 mm.

It is desirably to provide to the furniture industry an extruded indoor furniture component, which is cost-effective to produce, simple to install in a temporarily and/or permanently humid indoor environment, and which has a low weight. At the same time it is desirably that the extruded indoor furniture component presents favourable strength and being environment friendly to produce and to use. It is also desirably that the extruded indoor furniture component can be manufactured in a cost-effective way regarding its finished appearance, i.e. in an aesthetic point of view. It is thus an object of the present invention to provide an indoor furniture component which is environment friendly in that it does not release any formaldehyde during production and in that it does not expand nor will have any discoloration due to moisture during use. It should be of low weight and having a low production cost.

### SUMMARY OF THE INVENTION

This has been achieved by the extruded indoor furniture component defined in the introduction being characterized by the features of the characterizing part of claim 1.

In such way the cellulosic fibres and the polymer by means of the coupling agent can be coupled in an effective way. The coupling agent is thus for achieving a strong binding between the cellulosic fibres and the polymer (such as industrial grade polymer). The coupling agent can be maleic-acid-grafted PP (MAH-PP) or (MAH-PE), wherein polar characteristic of the coupling agent being set for coupling to the cellulosic fibres and an apolar characteristic of the coupling agent being set for coupling to the industrial grade polymer. The coupling agent preferably consists of a thermoplastic polymer grafted with an acid.

By means of the small dimension of the cellulosic fibres the reinforcing characteristics will be optimal.

In this way an extruded indoor furniture component is achieved in a cost-effective manner. Also is prevented release of formaldehyde (by means of industrial grade polymer surrounding the cellulosic fibres), expansion and discoloration due to moisture, for an indoor furniture component. The possibility to recycle the material of particle boards and the indoor furniture component still exists, wherein the cellulosic fibres can be separated from the resin. Thereby is achieved that the extruded indoor furniture component has a high strength-weight ratio, at the same time as it is environment friendly, inexpensive, moisture proof and cost-effective to mount on place.

In this way a WPC material is achieved for the production of well-designed home furniture at prices so low that as many people as possible will be able to afford them. The receipt of the WPC used in the production of the extruded indoor furniture component will provide for the application of recycling of particle board waste material, such as solid wood dust and chips, since the formaldehyde will be in a natural form and also reused. The production technology for and the inner structure and design of the extruded indoor furniture component provides for a cost effective application. Concerning the relevant high strength-weight ratio and mechanical characteristics, the no release of formaldehyde otherwise used for bonding, the otherwise appearing expansion and discoloration due to moisture, this WPC-material receipt is well developed for indoor furniture. The additional benefit to recycle particle board waste material and solid wood dust and chips provides is cost-effective.

Thereby the extruded indoor furniture component is cost-effective to produce due to the relative low percentage by weight of plastic and the relative high percentage by weight of cellulosic fibres. The total weight of the extruded indoor furniture component can in such way also be low, whereby it becomes user friendly and cost-effective to transport. The weight ratio is such that the plastic is heavier than the cellulosic fibres in relation regarding the same volume. The weight of the finished extruded indoor furniture component can thus be 50% less than the weight of an extruded indoor furniture component produced as a traditional chip board. As the plastic is more costly to produce than the cellulosic fibres regarding the same volume, the elongated indoor furniture component will be cost-effective to produce.

The re-use and minimal use or no use of melamine formaldehyde resin is significantly effective. As it is moisture resistant, it traditionally is used for boards being exposed to moisture according to prior art. However, the inventive solution herein disclosed provides for a saving of cost due to the minimal use the melamine formaldehyde resin. The extruded indoor furniture component thus is environment friendly at the same time as it is water proof, having high strength properties and is of low weight.

Suitably, the amount of polymer is as small as possibly but of such amount that it covers all exposed areas of all cellulosic fibres.

In this way the extruded indoor furniture component is made waterproof, wherein water or moisture is prevented by the plastic to penetrate the cellulosic fibres. This is advantageously when the extruded indoor furniture component is a part of indoor furniture being temporally subjected to moisture, such as kitchen furniture when being cleaned with water. This is also of very importance since the consumer mounting the delivered extruded indoor furniture component will have the possibility to cut off the component in any section, still achieving that the cut end will be waterproof. Thereby a furniture installer at site of mounting easily can mount the extruded indoor furniture component in a kitchen worktop assembly, which often being exposed to moisture. Preferably, the extruded indoor furniture component has a rectangular cross section and being hollow. In such way the elongated indoor furniture component is easy to mount in a temporally moisture indoor environment. A common furniture installer or consumer can himself cut the extruded indoor furniture component for achieving a length of the extruded indoor furniture component corresponding to a desired length of the remaining part of the furniture body.

Preferably, the orientation of the cellulosic fibres is provided irregularly.

Thereby the extruded indoor furniture component will have high strength properties and will be of low weight.

Suitably, the coupling agent is maleic-acid-hydride grafted PP or PE (MAH-PP or MAH-PE) or similar type.

Thereby a cost-effective coupling agent is used as it in this form has a very effective performance. This also implies that the content of formaldehyde can be held as low as possible in the WPC since the coupling agent does not comprise any formaldehyde which otherwise would be dangerous to health. In such way a common plastic can be used, which is cost-effective. Preferably, the polymer also is re-used for the production of the extruded indoor furniture component. No solvent has thus to be used during the production process for producing the coupling agent.

Preferably, the cellulosic fibres being comprised of particle board dust and/or wood chips.

Thereby, a furniture industry can reuse its own waste material when producing traditional chip wood furniture. Preferably, waste material in the form of wood chips and/or particle board dust is recycled from the production of traditional chip wood furniture components. Thereby the extruded indoor furniture component can consist of a major part recycled cellulosic fibres, which in a suitably way is cost-effective transported to the production line for the elongated indoor furniture component from a production line for the traditional chip wood furniture components in the same furniture industry plant. Preferably, other cellulosic fibres can be used, such as from corn stalks, cannabis or other natural fibres.

Suitably, the elongated indoor furniture component is an extruded tubular profile having a circular cross section.

In such way the elongated indoor furniture component can be used as a rigid indoor furniture leg element of light weight using as little material as possible due to the tubular profile and circular cross section. At the same time the circular cross section provides for a cost-effective thread cutting production adapted for fastening/adjusting the indoor furniture leg element to an indoor furniture component of e.g. a kitchen worktop in an user friendly way.

Alternatively, the profile has a 3-5 mm wall thickness and has at least three ribs arranged evenly between inner and outer walls of the profile. The number of ribs can be calculated by the formula D x π/40, wherein D is the outer diameter of the profile.

Preferably, the extruded indoor furniture component is an extruded hollow profile having a rectangular cross section.

Thereby the extruded indoor furniture component can be used as a base part of a kitchen worktop assembly indoor furniture or an indoor furniture shell being exposed to moisture.

Suitably, at least one of the extruded indoor furniture component being a part of an indoor furniture.

In this way an indoor furniture is provided, such as a kitchen bench or table, which has a low weight but still a high strength, which is cost-effective to produce and is environment friendly, and which is user friendly regarding the resistance against moisture and simplicity during mounting.

This has also been achieved by the method defined in the introduction having the steps of claim 11.

Thereby is provided a method for producing an indoor furniture component, having low weight, high strength, which is environment friendly and preferably composed of re-used polymer and cellulosic fibres, which is cost-effective to produce and resistant against moisture.

Preferably, the step of forming said mixture into a blank is performed by extrusion.

Thereby is achieved a method performed by means of extrusion, which is cost-effective.

Alternatively, a preceding step of grinding particle board waste material to clear out resin content from the waste material is performed for producing said cellulosic fibres.

Thereby an environmental friendly production is provided.

Preferably, the step of cutting precedes the step of sanding.

Thereby is achieved that the surface of the blank cost-effective can be provided with a coating thus achieving satisfactory adherence to the blank also on the edges thereof. The sanding provides for a necessary rough surface for the sake of excellent bounding between the coating material and the blank. After the cooling step the blank will have some bending or curving and the sanding step will adjust the blank so that it will have a straight surface which is preferred for the coating step.

Suitably, the step of coating includes veneering.

Thereby a method is provided that produces an extruded indoor furniture component which can replace an extruded natural wood component, wherein the extruded indoor furniture component has the same aesthetic appearance.

Preferably, the method further comprises the step of packaging said extruded indoor furniture component in a package for its transport to an indoor mounting site, and cutting once again said extruded indoor furniture component at said indoor mounting site to fit an indoor furniture.

Thereby the consumer or common furniture installer effective can install the extruded indoor furniture component at a mounting site by simple cutting a portion of the extruded indoor furniture component for fitting the latter into proper position, without any further working step regarding the protection against water intrusion into the extruded indoor furniture component. This is cost-effective.

This has also been achieved by the use defined in the introduction characterized by the features of claim 18.

Thereby a consumer can use the extruded indoor furniture component in an indoor furniture.

### BRIEF DESCRIPTION OF THE DRAWINGS

The present invention will now be described by way of example with reference to the accompanying schematic drawings, of which:
FIG. 1a illustrates a diagram reproducing an extrusion process from grinding of fibrous cellulosic material into the finished component;
FIG. 1b illustrates a diagram for transport and mounting of the component by a consumer in a last production step providing the finished component;
FIG. 2 illustrates a production line for the direct extrusion process shown in FIG. 1a according to a second embodiment;
FIG. 3 illustrates a production line for a direct extrusion process according to a third embodiment;
FIGS. 4a-4d illustrate a finished extruded indoor furniture component mounted according to the last production step in FIG. 1 b;
FIG. 5 illustrates a cross-section of the extruded indoor furniture component in FIG. 4d;
FIG. 6 illustrates a cross-section of an extruded indoor furniture component according to a fourth embodiment;
FIG. 7 illustrates a cross-section of two together joined extruded indoor furniture components having an optimal bearing capacity according to a fifth embodiment;
FIG. 8 illustrates a cross-section of an extruded indoor furniture component having interior linking walls for preventing withdrawal of a fastening element;
FIG. 9 illustrates a cross-section of an extruded indoor furniture component;
FIGS. 10a-10c illustrate an extruded indoor furniture component in the form of an indoor furniture leg and an enlarged section showing the WPC-material in detail; and
FIGS. 11a-b illustrate the application of the indoor furniture leg shown in FIG. 10a.

### DETAILED DESCRIPTION

Hereinafter, embodiments of the present invention will be described in detail with reference to the accompanying drawings, wherein for the sake of clarity and understanding of the invention some details of no importance are deleted from the drawings.

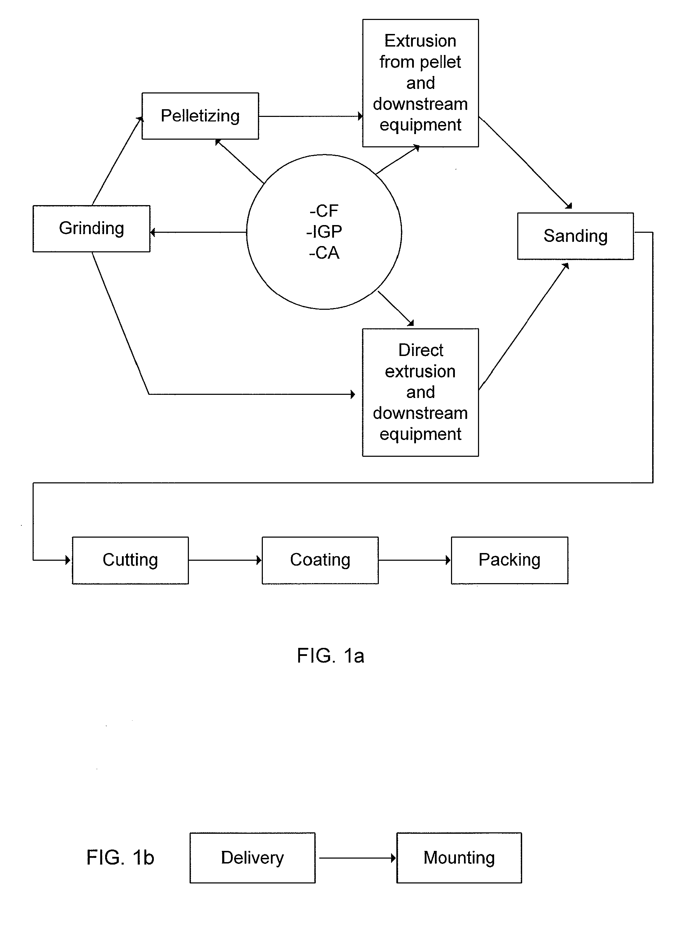

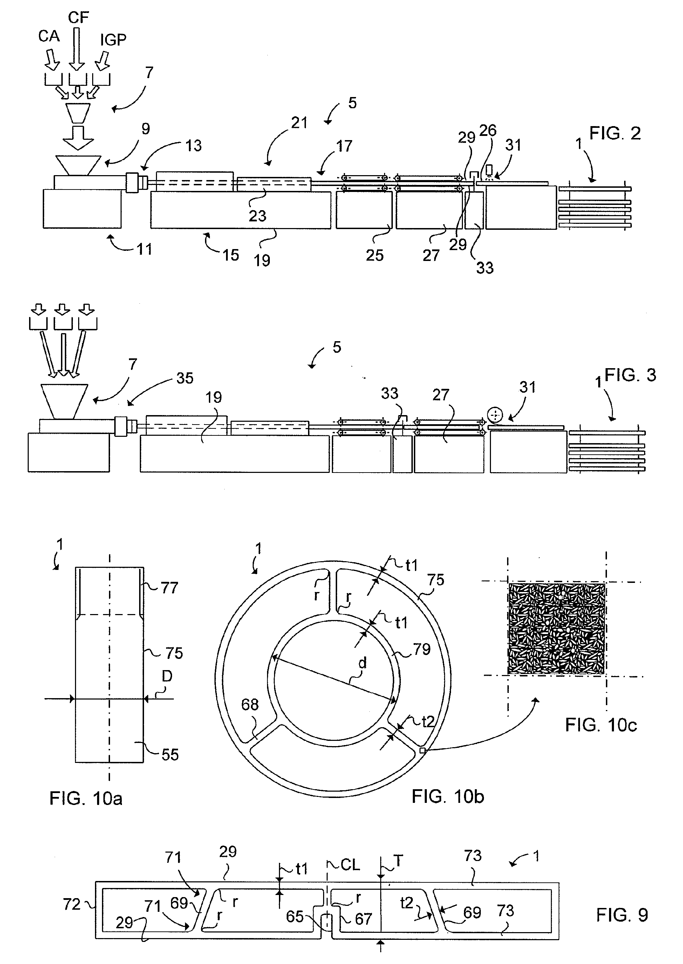

FIG. 1a schematically illustrates a diagram reproducing an extrusion process regarding grinding of fibrous cellulosic material, which being mixed with polymer material and a coupling agent CA and thereafter extruded into an extruded indoor furniture component 1 (not shown here, see e.g. FIG. 2). Industrial grade polymer IGP, in the form of polypropylene (PP), (also polyethylene (PE) or a mixture thereof can be preferred or other plastics as well), is used in the illustrated process for the filling polymer. Wood chips and particle board dust are used together with grinded natural wood for extracting cellulosic fibres. The cellulosic fibres are marked in FIG. 1 a with CF. In this process a mixture of natural wood (being grinded) and recycled particle board (the recycled particle board also being grinded or in another way divided wherein formaldehyde in the particle boards is split for separation from the cellulosic fibres) is provided. This cellulosic fibre mixture is in its turn mixed with the polypropylene PP (IGP) and the coupling agent CA. The coupling agent CA is used for binding the cellulosic fibres CF to the industrial grade polymer IGP. This mixture has about 1-3 wt.% of the coupling agent CA for achieving a strong binding between the cellulosic fibres CF and the industrial grade polymer IGP. The coupling agent CA is according to this embodiment a maleic-acid-grafted polymer (MAH-PP), wherein polar characteristic of the coupling agent CA being provided for coupling to the cellulosic fibres CF and an apolar characteristic of the coupling agent CA being provided for coupling to the polypropylene PP (IGP).

In FIG.1a is schematically shown two ways of producing the extruded indoor furniture component 1 using the same process with extrusion. One way is to extrude or form the mixture directly into an extruded prolonged blank according to a first embodiment. The other way is to use a pelletizing process for producing dry pellets consisting of the mixture (for example) of 1-3 wt.% coupling agent CA plus 70-80 wt.% cellulosic fibres CF plus 17-29 wt.% PP (IGP). The provided pellets are used for the further extrusion. The way of using pellets is also shown below in FIG. 2.

Also other proportions are available for the mixture. However, the essential feature is that the receipt consists of a major part of cellulosic fibres CF and a small part of the coupling agent CA: The proportions are:
- about 70% cellulosic fibres in the form of (lingo)cellulosic fibres CF, such as wood flour, wood chips, particle board dust, rice hulls, corn stalks, cannabis and other natural fibres etc., typically in the form of milled wood products or particles of waste lumber, bleached cellulose fibres or natural fibres of different grades and origins;
- about 20-28% industrial grade polymers IGP, such as polyethylene (PE), polypropylene (PP) and polyvinyl chloride. Preferably, the polymer can be re-used for the production of extruded indoor furniture components;
- about 1-3% coupling agent CA for achieving a strong binding between said cellulosic fibres CF and the industrial grade polymer IGP. The coupling agent CA can be maleic-acid-grafted polypropylene (MAH-PP) or maleic-acid-grafted polyethylene (MAH-PE), wherein polar characteristic of the coupling agent CA being set for coupling to the cellulosic fibres CF and an apolar characteristic of the coupling agent CA being set for coupling to the industrial grade polymer IGP, whereby the coupling agent CA provides for a strong bonding between the cellulosic fibres CF and the industrial grade polymer IGP.

The method of producing an extruded indoor furniture component 1 is thus described as follows. The major ingredient of the extruded indoor furniture component 1 is cellulosic fibres CF having an average diameter of 150-700 µm. The ingredients further being comprised of an industrial grade polymer IGP of an amount of about 20-28 wt.% and a coupling agent CA of an amount of about 1-3 wt.% disclosing said polar characteristic for coupling to the cellulosic fibres CF and a polar characteristic for coupling to the industrial grade polymer as being described above. The cellulosic fibres CF is of an amount of about 67-73 wt.%.

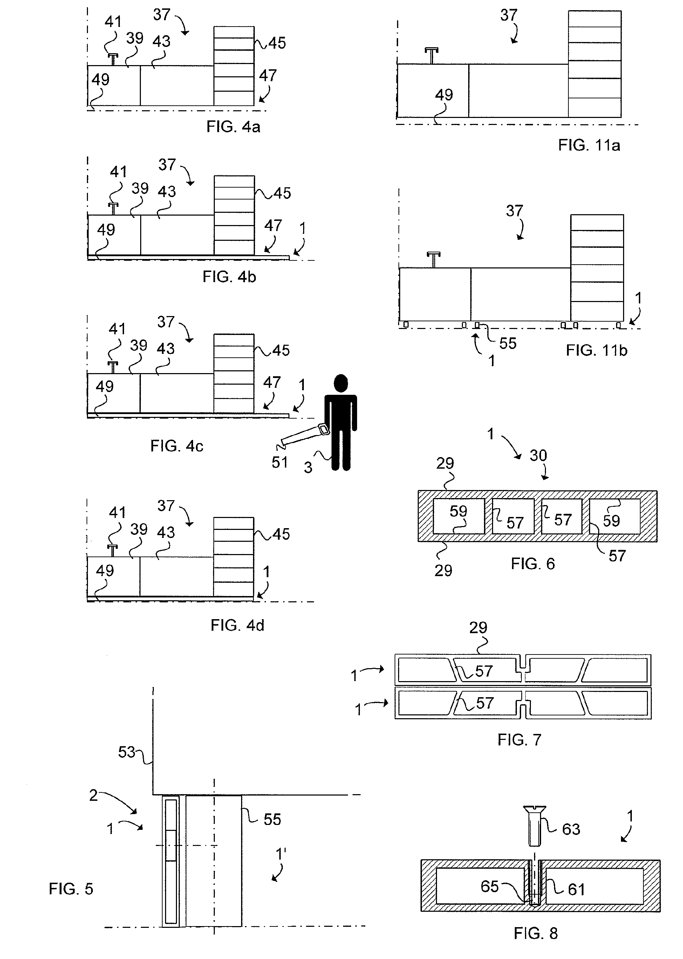

The following definition of the proportion is essential to notice in this example: If 73 wt.% CF is used, the CA is between approximately 1 and 3 wt.% and the IGP is between 24 and 26 wt.%. If 70 wt.% CF is used, the CA is between approximately 1 and 3 wt.% and the IGP is between 27 and 29 wt.%. If 67 wt.% CF is used, the CA is between approximately 1 and 3 wt.% and the IGP is between 30 and 32 wt.%. This means that the mixture composition range is between 67-73 wt.% CF, 24-32 wt.% IGP and 1-3 wt.% CA. As a relatively large amount of cellulosic fibres is used for production of the extruded indoor furniture component 1, the production is cost-effective since the price of cellulosic fibres in comparison with plastic is low. It is thus suitably to provide the extruded indoor furniture component 1 for an indoor furniture installer (consumer 3, see FIG. 4c) accordingly, as the component 1 will be easy to handle, cheap to buy and simple to install in an indoor environment occasionally exposed to water. No formaldehyde will be exposed or released as there is no need to use the same, wherein the coupling between the cellulosic fibres CF and the industrial grade polymer IGP is performed by the coupling agent CA as described above, which also is user friendly.

The method for producing the extruded indoor furniture component 1 comprises the steps of mixing the cellulosic fibres CF, the industrial grade polymer IGP and the coupling agent CA into a mixture, the mixture is extruded into a blank, cooling the formed blank, sanding the formed blank, cutting the formed blank into an extruded blank section 26. The extruded blank section 26 is ready to use in some applications, such as a hidden indoor furniture leg (see FIG. 11 b). Otherwise, the extruded blank section 26 is coated in a finishing step for providing said extruded indoor furniture component 1. Thereby is provided a method for producing an extruded indoor furniture component 1, having low weight, high strength, which is environment friendly and preferably composed of re-used polymer and cellulosic fibres CF, which is cost-effective to produce and resistant against moisture.

In this embodiment shown in FIG. 1a , the cutting is provided before the coating step, wherein coating can be provided also over the cut surfaces. The coating is performed by applying a veneer by gluing. After coating of the extruded indoor furniture components, they are packed in packings, in this case one separate extruded prolonged indoor furniture component in one packing. Unlike packing having an extruded indoor furniture component made of traditional particle board, the present extruded indoor furniture component 1 does not need to be supported by an extruded support rib added to the packing. The prior art particle board prolonged indoor furniture component certainly needs such a loose support rib in the packing for making the packing stiffer and unbreakable.
In FIG. 1b is schematically illustrated a diagram for transport and mounting of the extruded indoor furniture component 1 by a consumer 3 (see FIG. 4c) in a last production step providing a finished extruded indoor furniture component 1. The mounting of the extruded indoor furniture component 1 involves a second cutting of the extruded indoor furniture component 1 so that it fits the indoor furniture at site, such as a kitchen, where water occasionally appears. These cutting and mounting steps are shown more precise in FIGS. 4a-4d below.
FIG. 2 illustrates a production line 5 for the direct extrusion process shown in FIG. 1a according to a second embodiment wherein the pelletizing mentioned above is performed. The IGP (industrial grade polymer), the CF (cellulosic fibres), and the CA (coupling agent) are mixed into the mixture 7 and being formed into pellets 9. The pellets 9 comprising the mixture 7 are conducted by a suction unit (not shown) into an extruder 11 and pass an extrusion die 13. A dry calibration unit 15 performs a calibration of the extruded blank 17 on a calibration table 19 for achieving a predetermined thickness of the blank 17 within accepted tolerances. Thereafter the blank 17 is fed into a cooling station 21 in the form of a water bath 23. A haul-off driving unit 25 transports the blank 17 further to a sanding unit 27 for sanding the blank's 17 major sides 29. This is performed for better adhesion of a coating 31 which is applied in a coating step comprising lacquering. Before lacquering the sanded blank 17, a cutting is performed by a cutting unit 33, wherein a predetermined average length of the extruded indoor furniture component 1 is set. The applied lacquer is air-dried and the component 1 is packaged for storage and delivery.
FIG. 3 schematically illustrates a production line 5 for a direct extrusion process according to a third embodiment. This embodiment is similar to the second embodiment, but with the difference that the forming of the blank 17 is performed by an injection moulding unit 35. The IGP, CF and CA are mixed into a mixture 7 conveyed directly into the injection moulding unit 35 and the cutting step is performed before the sanding step.
FIGS. 4a-4d schematically illustrate a finished extruded indoor furniture component 1 mounted according to the last production step in FIG. 1b, i.e.
the step of delivery and mounting of the extruded indoor furniture component 1 into a kitchen furniture assembly 37. The kitchen furniture assembly 37 comprises a sink unit 39 comprising a water tap 41. A kitchen worktop 43 is mounted adjacent the sink unit 39. A larder case 45 is placed adjacent the kitchen worktop 43. A furniture installer or consumer 3 mounts the delivered extruded indoor furniture component 1 to the bottom part 47 of the kitchen furniture assembly 37 for bearing the load from the kitchen furniture assembly 37 against a floor 49. As shown in FIG. 4b, the delivered extruded indoor furniture component 1 protrudes from the assembly 37. The consumer 3 can easily cut the extruded indoor furniture component 1 with a saw 51 whereby the kitchen furniture assembly 37 is finished. The cut edge of the finished extruded indoor furniture component 1 will automatically comprise a waterproof edge and an indoor furniture is immediately ready to be used and
no attention whether water has been spilled over the extruded indoor furniture component 1 has to be done. A structural extruded indoor furniture component 1 has thus been achieved, which is water resistant immediately.
FIG. 5 schematically illustrates a cross-section of a further extruded indoor furniture component 2. This extruded indoor furniture component 2 comprises the extruded indoor furniture component 1 shown in FIG. 4d and an additional extruded indoor furniture component 1', which has been mounted with its prolongation orthogonally to the prolongation of the FIG. 4 dextruded indoor furniture component 1. The additional extruded indoor furniture component 1' is a structural furniture leg 55 also shown in FIG. 10a. The additional extruded furniture leg 55 has thus also been produced by the method described in connection with the FIG. 2, except for the sanding and coating steps. However, no cutting has to be done by the consumer 3, the furniture leg 55 is adjusted vertically by screwing it in a adjustment element (not shown) of the indoor furniture 53.
FIG. 6 illustrates a cross-section of an extruded indoor furniture component 1 according to a fourth embodiment. The extruded indoor furniture component 1 is an extruded hollow profile 30 having a rectangular cross section. It is provided with three interior walls 57 extending in the direction of the prolongation of the extruded indoor furniture component 1 and standing essentially orthogonally to the inside surfaces 59 of the major sides 29 of the component 1. This provides for an additional strength of the extruded indoor furniture component 1, still being of low weight, wherein it is used as a structural member in the indoor furniture 53, such as a bed leg (not shown). Cleaning a floor in a bedroom with water will not damage said bedroom indoor furniture accordingly.
FIG. 7 schematically illustrates a cross-section of two together joined extruded indoor furniture components 1 together having an optimal bearing capacity according to a fifth embodiment. The interior walls 57 are made during the extrusion of each component 1 by providing the extrusion die with a tool surface such that the radius within area for the transition between the inside surface 59 of the major side 29 of the extruded indoor furniture component 1 and the interior wall 57 is 2-5 mm, preferably 3-4 mm. The thickness of the walls is 1,5-4 mm, preferably 2-3 mm.
FIG. 8 schematically illustrates a cross-section of an extruded indoor furniture component 1 having interior linking walls 61 for preventing withdrawal of a fastening element 63, such as a screw. The linking walls 61 are provided with at least one bore 65 having a thread. The distance between the linking walls is 30-90 mm. Thereby the extruded indoor furniture component can be used as a base part of a kitchen work top furniture. I.e. if any accessories have to bee fixed to the component, the distance between the interior linking walls is thus smaller than the outer diameter of a screw.
FIG. 9 illustrates a cross-section of an extruded indoor furniture component 1 according to a further embodiment. The screw bore 65 forms a wider central interior rib 67 within the area of the screw bore 65, than the area formed by the remaining part of the central interior rib 67. This implies that the strength still will be optimal, wherein lateral interior ribs 69 are inclined such that their respective longitudinal end 71 emerges at a point on approximately half the distance from the component longitudinal edge 72 to the central interior rib 67. The wall thickness t1 of the outer walls 73 is 1,1-5 mm, preferably 1,5-4 mm and the thickness t2 of the ribs 67, 69 is 1,5-5, preferably 2-4 mm. The radius r of the concave curvature of the area, where each outer wall 73 merges with the interior ribs 67, 69 is 2-5 mm. Eventual fixing points for shelves, plinths etc. can be extruded simultaneously with the extrusion of the extruded indoor furniture component 1.
FIGS. 10a-10b schematically illustrate an extruded indoor furniture component 1 in the form of an indoor furniture leg 55 made by the extrusion. FIG. 10a shows the indoor furniture leg 55 in an elevated view. The outer diameter D of an outer circular profile wall portion 75 of the indoor furniture leg 55 is 40-70 mm, preferably 50-60 mm. One end is provided with a thread 77 for mounting to another furniture component (not shown) providing that the indoor furniture (not shown) can be adjustable vertically. FIG. 10b shows a cross-section of the indoor furniture leg 55. An inner circular profile wall portion 79 has an outer diameter d of 15-40 mm, preferably 20-30 mm. The thickness t1 of the circular profile wall portions 75, 79 and of extruded ribs 68 is 3-5 mm. The radius r of the concave curvature of the area, where each circular profile wall portion 75, 79 merges with the extruded rib 68 extending between the wall portions 75, 79, is 2-5 mm. Three extruded ribs 68 are provided between the inner and outer circular profile wall portion, which number is cost-effective regarding the material use, still achieving an optimal strength. FIG. 10c schematically shows an enlarged section showing the WPC-material in detail. Dark area of the FIG. 10c represents the IGP (industrial grade polymer) and the white areas represent the CF (cellulosic fibres). The amount of plastic is as small as possibly but of such amount that it covers all exposed areas of all cellulosic fibres CF. In this way the extruded indoor furniture component 1 is made waterproof, wherein water or moisture is prevented by the industrial grade polymer IGP to penetrate the cellulosic fibres CF. This is advantageously for the extruded indoor furniture component 1 being temporally or permanently subjected to moisture in an indoor environment.
FIGS. 11a-b schematically illustrate the application of the indoor furniture leg 55 shown in FIG. 10a. A kitchen furniture assembly 37 similar to that presented in FIG. 4a comprises twelve (six of which is hidden by the legs in front) structural extruded indoor furniture components 1, in the form of water proof legs 55.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The grinding process for achieving cellulosic fibres from e.g. natural wood, can also be performed by drilling or by other splinting methods.

## Claims

1. An extruded indoor furniture component, the ingredients of which being comprised of cellulosic fibres (CF) having an average diameter of 150-700 µm, preferably 300-550 µm, **characterized by** that the ingredients further being comprised of:
- a polymer (IGP) of an amount of about 20-28 wt.%;
- a coupling agent (CA) of an amount of about 1-3 wt.% disclosing polar characteristic for coupling to said cellulosic fibres (CF) and apolar characteristic for coupling to the polymer (IGP); and
- the cellulosic fibres (CF) is of an amount of about 70% wt.%.

2. The extruded indoor furniture component according to claim 1, **wherein** the amount of polymer (IGP) is as small as possibly but of such amount that it covers all exposed areas of all cellulosic fibres (CF).

3. The extruded indoor furniture component according to claim 1 or 2, **wherein** the orientation of the cellulosic fibres (CF) is provided irregularly.

4. The extruded indoor furniture component according to any of claims 1 to 3, **wherein** the coupling agent is maleic-acid-hydride grafted PP or PE (MAH-PP or MAH-PE) or similar type.

5. The extruded indoor furniture component according to any of the preceding claims, **wherein** the cellulosic fibres (CF) being comprised of particle board dust and/or wood chips.

6. The extruded indoor furniture component according to any of the preceding claims, **wherein** the extruded indoor furniture component (1) is an extruded tubular profile (75) having a circular cross section.

7. The extruded indoor furniture component according to claim 6, wherein the profile has a 3-5 mm wall thickness and has at least three ribs arranged evenly between inner and outer walls of the profile.

8. The extruded indoor furniture component according to any of claims 1-5, **wherein** the extruded indoor furniture component (1) is an extruded hollow profile (30) having a rectangular cross section.

9. The extruded indoor furniture component according to any of the preceding claims, **wherein** interior linking walls (61) is provided within the component (1) for preventing withdrawal of a fastening element (63), such as a screw.

10. An indoor furniture comprising at least one extruded indoor furniture
component (1) according to any of the preceding claims.

11. A method of producing an extruded indoor furniture component, the
ingredients of which being comprised of cellulosic fibres (CF) having an average diameter of 150-700 µm, preferably 300-550 µm, the ingredients further being comprised of a polymer (IGP) of an amount of about 20-28 wt.%; a coupling agent (CA) of an amount of about 1-3 wt.% disclosing polar characteristic for coupling to said cellulosic fibres (CF) and a polar characteristic for coupling to the polymer (IGP); and the cellulosic fibres (CF) is of an amount of about 70% wt.%, the method is **characterized by** the steps of:
- mixing said cellulosic fibres (CF), said polymer (IGP) and said coupling agent (CA) into a mixture (7);
- forming said mixture (7) into a blank (17);
- cooling the formed blank (17);
- sanding the formed blank (17);
- cutting the formed blank (17) into an extruded blank section (26); and optionally coating the extruded blank section (26) in a finishing step for providing said extruded indoor furniture component (1).

12. The method according to claim 11, **wherein** the step of forming said
mixture (7) into a blank (17) is performed by extrusion.

13. The method according to any of claims 11-12, **wherein** the step of
cutting precedes the step of sanding.

14. The method according to any of claims 11-13, **wherein** the step of
coating includes veneering.

15. The method according to any of claims 11-14, **wherein** a preceding step of grinding particle board waste material to clear out resin content from the waste material is performed for producing said cellulosic fibres (CF).

16. The method according to any of claims 11-15, **wherein** the method
further comprises the step of:
- packaging said extruded indoor furniture component (1) in a package for its transport to an indoor mounting site; and
- cutting once again said extruded indoor furniture component (1) at said indoor mounting site to fit an indoor furniture (53).

17. A use of an extruded indoor furniture component (1), **characterized**
**by that** the extruded indoor furniture component (1) is used as a part of an indoor furniture (53).
